(19) Europäisches Patentamt

European Patent Office

Office européen des brevets

(11) **EP 0 581 396 B1**

(12) **EUROPÄISCHE PATENTSCHRIFT**

(45) Veröffentlichungstag und Bekanntmachung des Hinweises auf die Patenterteilung:
**23.10.1996 Patentblatt 1996/43**

(51) Int Cl.⁶: **H02P 7/628**

(21) Anmeldenummer: **93250162.0**

(22) Anmeldetag: **10.06.1993**

(54) **Verfahren zur Selbstregelung einer umrichtergespeisten Drehstrommaschine**

Method for self-controlling a converter-powered three-phase machine

Procédé pour l'autoréglage d'une machine triphasée alimentée par un changeur de fréquence

(84) Benannte Vertragsstaaten:
**AT DE ES GB IT SE**

(30) Priorität: **29.07.1992 DE 4225397**

(43) Veröffentlichungstag der Anmeldung:
**02.02.1994 Patentblatt 1994/05**

(73) Patentinhaber: **AEG Westinghouse Transport-Systeme GmbH D-13599 Berlin (DE)**

(72) Erfinder:
- **Hofmann, Wilfried, Prof. Dr.-Ing. O-8010 Dresden (DE)**
- **Krause, Michael, Dipl.-Ing. O-1054 Berlin (DE)**

(74) Vertreter: **Hamilton, Eberhard et al AEG Aktiengesellschaft Patent- und Lizenzwesen Theodor-Stern-Kai 1 60596 Frankurt (DE)**

(56) Entgegenhaltungen:
**DE-A- 3 438 504**

- **PATENT ABSTRACTS OF JAPAN, unexamined applications, E Field, Band 14, Nr. 444, 21. September 1990 THE PATENT OFFICE JAPANESE GOVERNMENT Seite 99 E 982**
- **PATENT ABSTRACTS OF JAPAN, unexamined applications, E Field, Band 14, Nr. 307, 13. Juli 1989 THE PATENT OFFICE JAPANESE GOVERNMENT Seite 26 E 787**
- **IEEE TRANSACTIONS ON MAN AND CYBERNETICS, vol. 21, no. 4, July/August 1991; Chang-Ming Liaw et al.: 'Design and Implementation of a Fuzzy Controller for a High Performance Induction Motor Drive', pp. 921-929**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Selbstregelung einer umrichtergespeisten Drehstrommaschine, wie es im Oberbegriff des Anspruchs 1 näher definiert ist.

Aus der DE-OS 34 38 504 /1/ ist dazu ein Verfahren und eine Einrichtung zur Regelung einer Drehfeldmaschine bekannt, bei der ausgehend von aus gemessenen Ständerstrom- und Ständerspannungskomponenten gebildeten drei Ständerflußistwerten - die als Istwerte eines Flußregelkreises dienen - und dem Drehmomentistwert, der als Istwert eines Drehmomentregelkreises dient, auf direktem Wege derjenige Wechselrichter-Schaltzustand eingeschaltet wird, der die Phasenlage und Frequenz des Ausgangsspannungssystems in Abhängigkeit eines vorgegebenen Fluß- und Drehmoment-Sollwertes verstellt. Diese Funktion wird von drei Flußkomparatoren und je einem Zwei- bzw. Dreipunktregler für Drehmoment und Flußamplitude erfüllt.

Des weiteren ist aus "Etz-Archiv" (1989) H. 1, S. 11-16 /2/ ein Verfahren zur indirekten Selbstregelung bekannt, in dem vorgeschlagen wird, den Ständerflußzeiger auf einer Kreisbahn zu führen und über einen zwischen Drehmoment- bzw. Flußbetragsregler und Wechselrichteransteuerung zwischengeschalteten Pulsweitenmodulator die gewünschte mittlere Ausgangsspannung zu erzeugen.

In "IEEE Trans. on Ind. Appl." (1986) pp. 820-827 /3/ wird eine schaltende Fluß- und Drehmomentregelung beschrieben, mit der es möglich ist, den Flußzeiger der Maschine auf einer Kreisbahn zu führen.

Die genannten Verfahren arbeiten besonders exakt, wenn eine analoge Signalverarbeitung zum Einsatz kommt bzw. wenn sehr hohe Abtastraten der verwendeten Digitaltechnik realisierbar sind. Insbesondere bei letzterem besteht das Problem, daß die durch die nichtlinearen Regler eingestellten oberen und unteren Schwellwerte (Grenzwerte) nie zum erforderlichen Zeitpunkt abgefragt werden können und somit transiente Regelfehler entstehen.

Die in /1/ und /3/ vorhandene gegenseitige Beeinflussung beider schaltender Regler kann außerdem zu unnötigen Schaltsequenzen führen und zur lokalen Erhöhung der Ventilschaltfrequenz beitragen.

Die in /2/ angegebene Anordnung vermeidet zwar dieses Problem, da durch Einsatz eines Pulsweitenmodulators die Schaltfrequenz konstant bleibt, aber sie besitzt nur einen eingeschränkten Stellbereich und hat dynamische Nachteile wegen der Einstellung eines mittleren Spannungsanzeigers.

Daher ergab sich bisher nur durch Kombination mehrerer Verfahren die Möglichkeit, den gesamten Stellbereich zu bedienen.

In "IEEE Trans. on Syst. Man and Cybernetics" (1991), Bd. 21, H. 4, S. 921929/4/ wird ein Verfahren vorgestellt, bei dem eine Fluß- und Drehmomentenregelung mit einer zusätzlichen Stromregelung nach Art des aus /1/ bekannten Verfahrens einen 12-Puls-Wechselrichter ansteuert. Überlagert ist dabei ein Fuzzy-Regler als Drehzahlregler.

Aufgabe der Erfindung ist es, ein Verfahren und eine Einrichtung zur Regelung eines Drehstromantriebes zu schaffen, mit dem/der die vorgenannten Nachteile beseitigt werden können. Das Verfahren soll so flexibel sein, daß im gesamten Drehzahlstellbereich sehr gute dynamische und stationäre Eigenschaften erzielt werden können.

Diese Aufgabe wird für ein Verfahren der eingangs genannten Art gemäß den kennzeichnenden Merkmalen des Anspruches 1 gelöst.

Durch das erfindungsgemäße Regelfahren ergeben sich folgende Vorteile:

1. Den Unsicherheiten bei der Abtastung der Istwerte und Berechnung der Modellgrößen innerhalb der vorgegebenen Grenzwerte wird mit einem unscharfen Regelkonzept Rechnung getragen.
2. Die Pulsfrequenz läßt sich problemlos konstant halten, und man kann eine optimale Auslastung des Stellgliedes bei Einhaltung der geforderten Drehmomentdynamik erreichen.
3. Eine einheitliche und übersichtliche Signalverarbeitung ist im gesamten Stellbereich des DS-Antriebes einsetzbar.
4. Die Kontrollregeln lassen sich arbeitspunktabhängig zur Einhaltung eines eptimalen stationären und dynamischen Betriebes anpassen.
5. Die Signalverarbeitung ist mit fuzzybasierter Elektronik sehr einfach und rechenzeitsparend zu gestalten.

Vorteilhafte Ausgestaltungen zum Verfahren sowie für eine Einrichtung zur Durchführung sind den Unteransprüchen entnehmbar.

Anhand von schematischen Ausführungsbeispielen wird die Erfindung im nachstehenden näher beschrieben, wobei auf die Figuren der Zeichnung Bezug genommen wird.

Es zeigen:

Fig. 1     Schema zur Signalverarbeitung.
Fig. 2     Zeigerbild zur Fluß- und Drehmomentregelung,
Fig. 3     Fuzzifizierung der Regeldifferenzen,
Fig. 4     Spannungszeigerbild für kreisförmige Flußbahn,

Fig. 5      Regelmatrix für kreisförmige Flußbahn,

Fig. 6      Spannungszeigerbild für secheckförmige Flußbahn,

Fig. 7      Reglermatrix für sechseckförmige Flußbahn,

Fig. 8      Defuzzifizierung und Pulszeitbestimmung bei Verwendung von zwei Spannungszeigern pro Pulsperiode,

Fig. 9      erweitertes Schema zur Signalverarbeitung mit Prädiktion,

Fig.10a    Reglermatrix für Wirkspannungszeiger bei kreisförmiger Flußbahn und Einbeziehung des Nullspannungszeigers,

Fig.10b    Reglermatrix für Nullspannungszeiger,

Fig.11     Schema zur Signalverarbeitung bei Einbeziehung des Nullspannungsvektors.

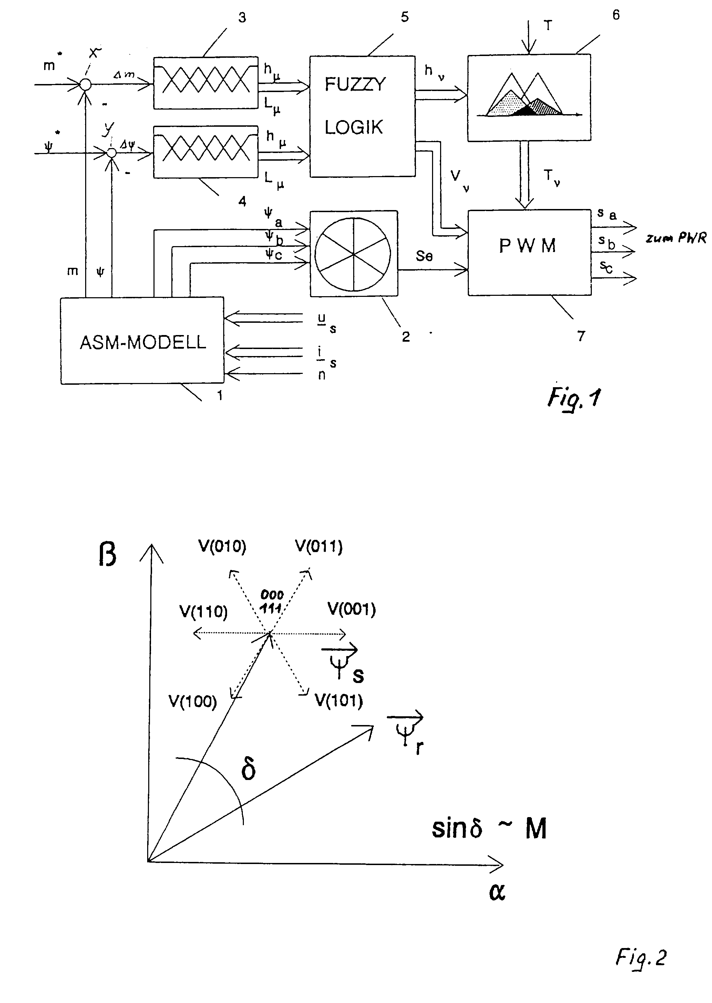

Aus dem in Fig. 2 dargestellten Zeigerbild ist das physikalische Verhalten der an einer Regelung von Drehmoment und Fluß beteiligten Motorgrößen ersichtlich. Geht man von den dort angedeuteten 8 Schaltmöglichkeiten (000; 111; 001; 011; 010; 110; 100; 101) eines Zweipunkt-Spannungswechselrichters in Drehstrombrückenschaltung aus, so zeigt sich, daß über die Auswahl und Einschaltdauer des jeweiligen Spannungszeigers die Geschwindigkeit, der Phasenwinkel δ sowie die Amplitude des Ständerflußzeigers $\psi_S$ direkt beeinflußt werden kann, abgesehen von einem lastabhängigen Spannungsabfall $\underline{i}_S \cdot R_S$ über dem Ständerwiderstand $R_S$. Dies zeigt der Zusammenhang

$$\psi_s = \int (\underline{u}_S - R_S \cdot \underline{i}_S)\, dt$$

Das ebenfalls zu regelnde Drehmoment M erhält man aus der Beziehung

$$m = \frac{3}{2} \cdot Z_P \cdot \frac{1}{L\sigma} \cdot \hat{\psi}_S \cdot \hat{\psi}_r \cdot \sin\delta$$

Darin bedeuten

δ = Winkel zwischen Rotorfluß und Ständerfluß

$\Psi_r$ = Rotorfluß

α = Realteil des Zeigers

β = Imaginärteil des Zeigers

$Z_P$ = Polpaarzahl

$L_\sigma$ = Gesamtstreuinduktivität

Daraus ergibt sich, daß durch die Auswahl der Spannungszeiger einmal die Bahngeschwindigkeit des Ständerflußzeigers $\psi_S$ und damit im wesentlichen das Drehmoment M und zum anderen der Betrag des Flußzeigers $\Psi_S$ gesteuert werden kann. Dies geschieht nicht ohne gegenseitige Verkopplung. Die Wahl der Spannungszeiger wird weiterhin beeinflußt von der vorgesehenen Flußzeigerbahn, die vorzugsweise im unteren Drehzahlstellbereich kreisförmig und im oberen hexagonal vorgegeben wird.

Bisher bekannte und vorstehend angeführte Verfahren lösten das Regelproblem durch Anwendung nichtlinearer Regler mit Hilfe einer mit sehr hoher Abtastrate arbeitenden Signalverarbeitung.

In dem Schema zur erfindungsgemäßen Signalverarbeitung nach Fig. 1 findet ein Fuzzy-Regler Anwendung. Dabei werden aus den Meßwerten für die Ständerspannung $\underline{u}_S$, den Ständerstrom $\underline{i}_S$ und die Drehzahl n in einem Modell 1 einer Asynchronmaschine über Modellgleichungen des Motors Istwerte für das Drehmoment m und den Flußbetrag $\psi$, sowie die drei Flußkomponenten $\Psi_a$, $\Psi_b$ und $\psi_c$ gebildet. Die drei Flußkomponenten $\Psi_a$, $\Psi_b$, $\Psi_c$ der Stränge a,b und c werden dann in einer Einrichtung 2 zur Sektorerkennung des Flußzeigers ausgewertet, die ein charakteristisches Ausgangs-Erkennungssignal Se abgibt. Die gebildeten Regeldifferenzen des Drehmomentes Δm = (m*- m)_im Vergleichspunkt X und des Flußbetrages ΔΨ = (Ψ* - Ψ) im Vergleichspunkt Y werden Fuzzifizierungseinrichtungen 3 und 4 übergeben, die die determinierten Signale in unscharfe Größen überführen. Diese sind jeweils charakterisiert durch linguistische Ausgangsvariable $L_\mu$ und deren Zugehörigkeitsfunktionen $h_\mu$.

Die getrennt gebildeten unscharfen Größen für Drehmoment- und Fluß-betragsdifferenz werden anschließend einer Fuzzy-Logik 5 - in der die eigentlichen Kontrollregeln enthalten sind - zur Verknüpfung der beiden unscharfen Mengen zugeführt. Hier erfolgt sowohl die logische als auch die arithmetische Verrechnung. Nach erfolgter logischer bzw. arithmetischer Verknüpfung der linguistischen Variablen $L_\mu$ bzw. deren Zugehörigkeitsfunktionen $h_\mu$ - wobei im Ergebnis eine Vorauswahl der günstigsten Spannungszeiger $V_\nu$ erfolgt und die zugehörigen resultierenden Wahrheitswerte $h_\nu$ entstehen - werden zunächst letztere und die vorgegebene Pulsperiode T einer Einrichtung 6 zur Defuzzifizierung zugeführt. Dort werden die unscharfen Größen wieder in determinierte Signale umgewandelt, die durch Einschaltzeiten $T_\nu$ der vorausgewählten Spannungszeiger $V_\nu$ charakterisiert sind.

Das aus der Einrichtung Sektorerkennung 2 bereitgestellte Sektor-Erkennungssignal Se, die vorausgewählten Spannungszeiger $V_v$ aus der Fuzzy-Logik 5 und die Einschaltzeiten $T_v$ werden abschließend in einem Pulsweitenmodulator 7 in die zur Wechselrichter-Ansteuerung verwendbaren Ausgangssignale $s_a$, $s_b$ und $s_c$ verarbeitet.

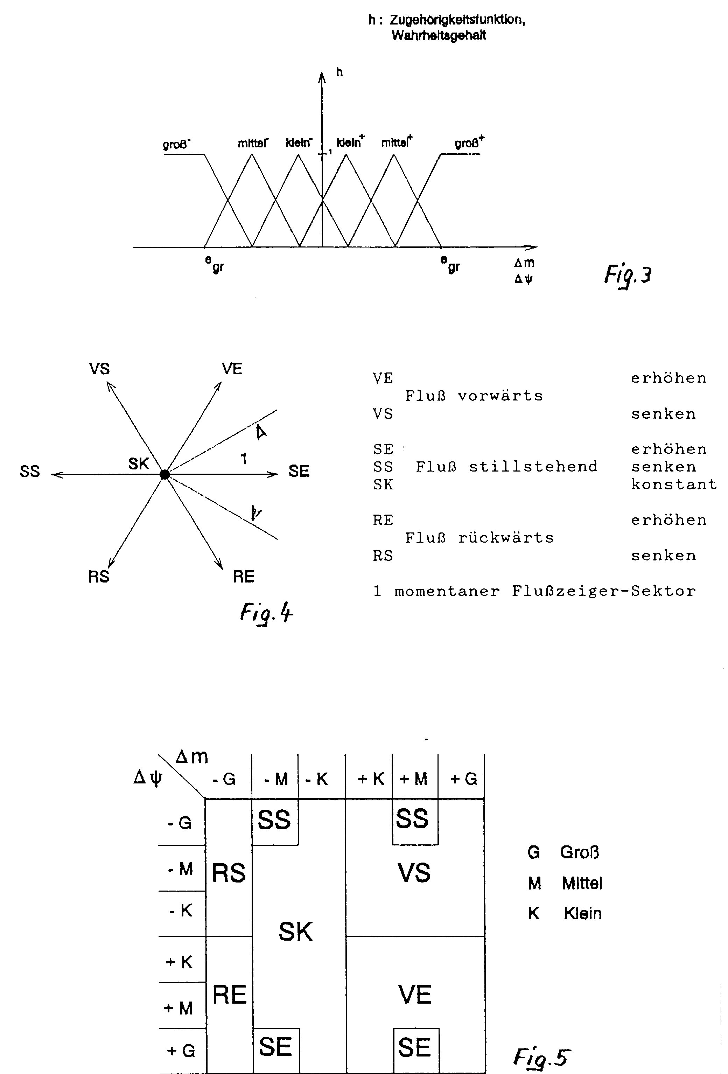

Eine Möglichkeit zur Umwandlung der determinierten Regeldifferenzen $\Delta m$ und $\Delta\Psi$ in unscharfe Größen, die mittels der Fuzzifizierungseinrichtungen 3 und 4 erfolgt, ist in Fig. 3 dargestellt:

Diese zeigt, daß für beide relevanten Regeldifferenzen (für Drehmoment und Fluß) eine Kategorisierung in vorzugsweise 6 Mengen, sogenannte Fuzzy-Sets oder Bezeichnung groß⁻, mittel⁻, klein⁻, klein⁺, mittel⁺ und groß⁺ vorgenommen wird, denen jeweils typische Zugehörigkeitsfunktionen im Wertebereich von 0 bis 1 mit entsprechendem Wahrheitsgehalt zugeordnet sind. Dazu sollten vorzugsweise die dargestellten Dreieckfunktionen ausgewählt werden. Es sind aber auch andere Verläufe denkbar, z.B. Trapezfunktionen. Die Kategorie groß⁻ bedeutet dabei z.B. große Abweichung in negativer Richtung; die Kategorie klein⁺ kleine Abweichung in positiver Richtung. Wesentlich ist, daß zwischen den definierten Kategorien Grauzonen liegen, die durch unterschiedliche Wahrheitswerte der benachbarten Fuzzy-Sets beschrieben werden können. Die Argumentwerte der definierten Mengen können unterschiedlich gewählt werden; es ist jedoch aus der Sicht einer einfachen Signalverarbeitung vorteilhafter, gleichgroße Mengen zu bestimmen. Wesentlich für die Funktionsweise der vorgeschlagenen Regelung ist die Festlegung desjenigen Argumentwertes $e_{gr}$, der für die jeweilige betragsmäßig größte Kategorie durch den Wahrheitsgehalt 1 charakterisiert ist. Dieser bestimmt die mittlere Toleranzbreite der jeweiligen Regelgröße und sollte vorgegeben werden.

Ein Zahlenbeispiel geht von vier (2 x 2) linguistischen Eingangsvariablen für Drehmoment und Fluß mit den Wahrheitsgehalt repräsentierenden Zugehörigkeitsfunktionswerten aus:

Funktionswert für Drehmoment $\Delta m_1$ bei $h_m(\text{mittel}^+)$ = 0 75; für $\Delta m_2$ bei $h_m(\text{klein}^+)$ = 0.25.

Funktionswert für Fluß $\Delta\Psi_1$ ist bei $h_\Psi(\text{klein}^+)$ = 0.85; für $\Delta\Psi_2$ bei $h_\Psi(\text{klein}^-)$ = 0.15

Die Verknüpfung der jeweils beiden Regeldifferenz-Mengen für Drehmoment ($L_m$) und Flußbetrag ($L_\Psi$) kann anhand von Regelmatrizen bzw. Produktionsregeln beschrieben werden.

In Fig. 5 ist eine derartige Regelmatrix für eine Flußzeigersteuerung auf einer kreisförmigen Flußbahn angegeben. Es sind die FuzzySetbereiche von -G bis +G sowohl für $\Delta m$ (X-Achse) als auch für $\Delta\Psi$ (Y-Achse) eingetragen und die resultierend möglichen Vektorbereiche für die Flußsteuerung angegeben. Dies sind:

Vektor VE für Fluß vorwärts erhöhen
Vektor VS für Fluß vorwärts senken
Vektor SE für Fluß stillstehend erhöhen
Vektor SS für Fluß stillstehend senken
Vektor SK für Fluß stillstehend konstant
Vektor RE für Fluß rückwärts erhöhen und
Vektor RS für Fluß rückwärts senken.

Aus den in den Fuzzifizierungseinrichtungen 3,4 gebildeten linguistischen Variablen $L_\mu$ für die Fluß- und Regeldifferenzen $\Delta\psi$ und $\Delta m$ mit den jeweiligen Zugehörigkeitsfunktionswerten $h_\mu$, (vgl. Fig. 1) wird eine neue linguistische Variable $V_v$ gebildet, die durch Eintragung in die jeweilige Spalte und Zeile der Regelmatrix nach Fig. 5 gewonnen wird. Die Bedeutung geht dann aus Fig. 4, dem Spannungszeigerbild für kreisförmige Flußbahn hervor. Der aktuelle Flußzeiger befindet sich hier - wie angedeutet - gerade im Sektor 1.

Entsprechend dem aus Fig. 5 gewonnenen Ergebnis kann dann die Spannung entsprechend den gleichnamigen Vektoren in Fig. 4 eingestellt werden. Neben dieser logischen Zuordnung erfolgt jedoch parallel dazu noch eine arithmetische Verknüpfung der Zugehörigkeitsfunktionswerte der Eingangsvariablen. Das Zahlenbeispiel zeigt, daß durch die Regelmatrix jeweils vier Eingangskombinationen bzgl. ihrer Zugehörigkeitsfunktionen verrechnet werden müssen. In Verbindung mit einer ausgangsseitigen Pulsweitenmodulation erweist es sich vorteilhaft als Operator das algebraische Produkt in Analogie zum logischen UND zu verwenden; denn die Produktionsregel schreibt vor:

IF ($\Delta m \; \varepsilon$ groß⁻) $\Lambda$ ($\Delta\Psi \; \varepsilon$ klein⁺)THEN $\rightarrow$ ....

Verallgemeinernd kann aber auch ein Mischoperator ($_\gamma$-Operator) verwendet werden, der eine Wichtung zwischen algebraischer Summe und Produkt zuläßt und damit arbeitspunktspezifisch einsetzbar ist.

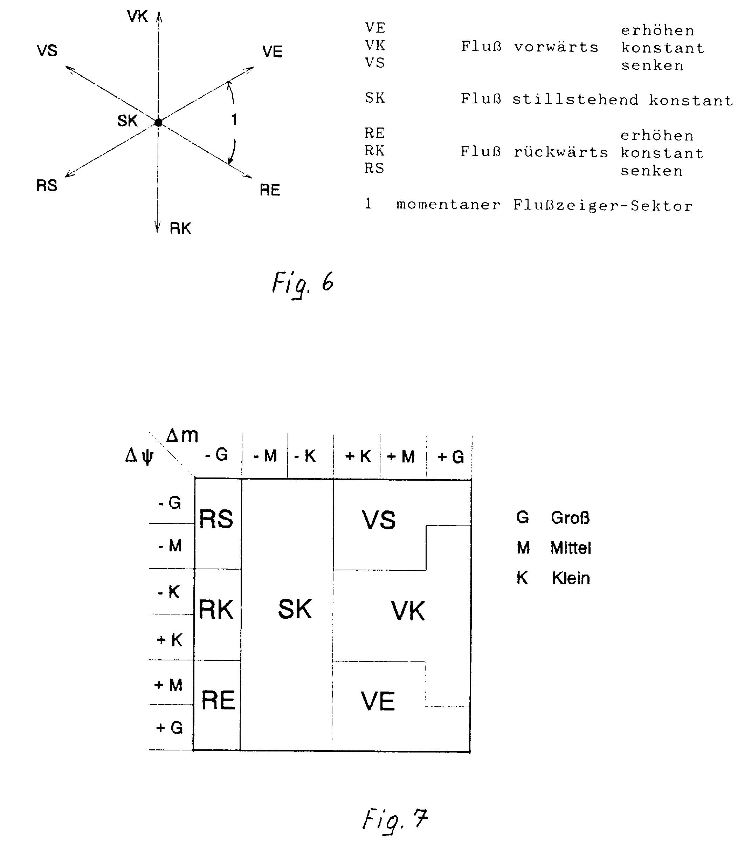

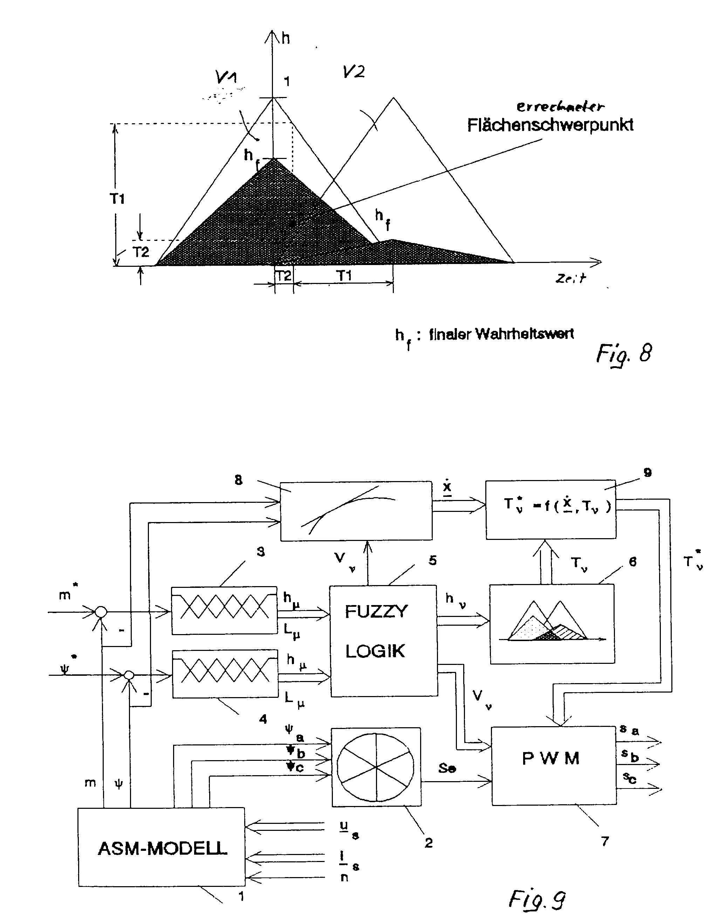

Zur Steuerung des Flußzeigers auf einer Sechseckbahn muß die Definition der linguistischen Ausgangsvariablen gemäß Fig. 6 modifiziert werden. Demzufolge fällt auch die Regelmatrix gemäß Fig. 7 etwas anders aus, in der die veränderten Koppelbedingungen zwischen Drehmoment und Flußbetrag in bezug auf die Spannungszeiger berücksichtigt werden.

Die aus den Verrechnungen der Regelmatrix resultierenden Ergebnisse werden in einem weiteren Schritt miteinander verglichen, und es werden die beiden linguistischen Ausgangsvariablen ausgewählt, die aus der Verknüpfung mit den beiden größten finalen Zugehörigkeitswerten $h_v$ hervorgehen. Für das Zahlenbeispiel mit kreisförmiger Flußbahn heißt das für 2 Zeiger:

1. WENN ($L_m$= mittel⁺) UND ($L_\Psi$= klein⁺) DANN V = VE wählen z.B. $h_f$ = $h_m$(mittel⁺) * $h_\Psi$(klein⁺) = 0.63 (entspricht Wahrheitsgehalt)

2. WENN ($L_m$ = mittel⁺) UND ($L_\Psi$ = klein⁻) DANN V = VS wählen z.B. $h_f$ = $h_m$(mittel⁺) * $h_\Psi$(klein⁻) = 0.112 (entspricht Wahrheitsgehalt)

3. WENN ($L_m$ = klein⁺) UND ($L_\Psi$ = klein⁺) DANN V = VE wählen z.B. $h_f$ = $h_m$(klein⁻) * $h_\Psi$(klein⁺) = 0.212 (entspricht Wahrheitsgehalt)

4. WENN ($L_m$ = klein⁺) UND ($L_\Psi$ = klein⁻) DANN V = VS wählen z.B. $h_f$ = $h_m$(klein⁺) * $h_\Psi$(klein⁻) = 0.038 (entspricht Wahrheitsgehalt)

Die Gleichungen 1. und 3. beschreiben denselben Vektor VE mit jeweils anderer Zugehörigkeitsfunktion, ebenso Gleichungen 2. und 4. für Vektor VS.
Aus allem folgt: Den größten Wahrheitsgehalt haben

$$h_f(\text{VE}) = 0.63 \text{ und } h_f(\text{VS}) = 0.112 \, .$$

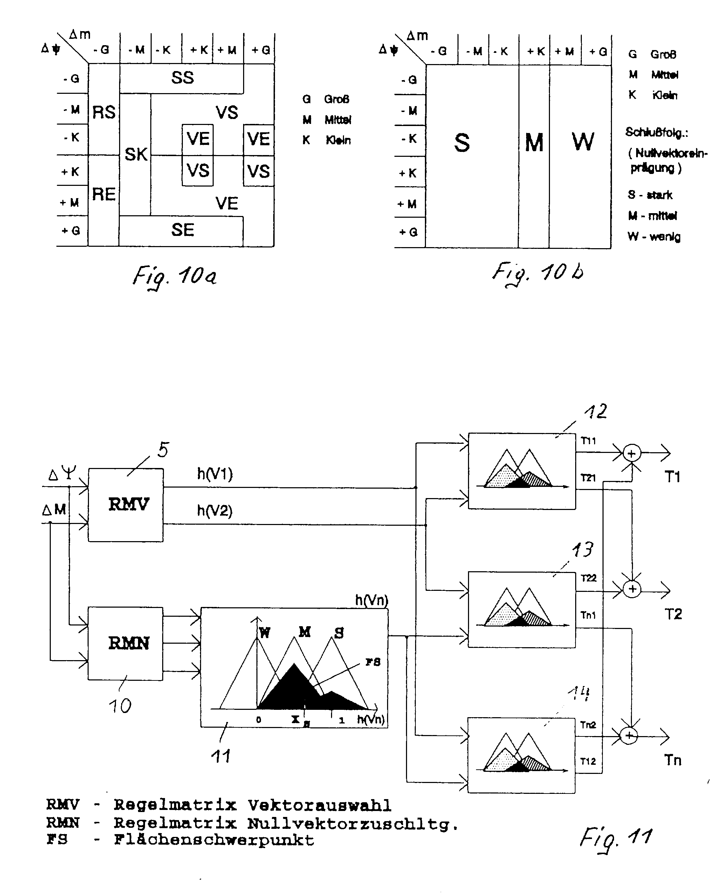

In einem weiteren Schritt müssen nun die beiden ausgewählten linguistischen Ausgangsvariablen zur Flußzeigersteuerung und ihre zugeordneten Wahrheitswerte in scharfe Ausgangsgrößen umgewandelt werden. Fig. 8 zeigt das Vorgehen bei der Defuzzifizierung zweier unscharfer linguistischer Ausgangsvariablen, denen wieder zweckmäßigerweise dreieckförmige Zugehörigkeitsfunktionen zugeordnet werden. Diese sind jeweils dann Null, wenn die jeweils andere Funktion den Wert 1 besitzt. Beide Zugehörigkeitsfunktionen werden nun mit dem aus der Regelmatrix errechneten finalen Zugehörigkeitswert gewichtet, so daß Dreiecke mit unterschiedlichem Flächeninhalt entstehen. Danach läßt sich durch Ermittlung des Flächenschwerpunktes beider Figuren eine Relation zwischen beiden Ausgangsvariablen herstellen. Ordnet man der Abszissenachse die gewünschte Ventileinschaltzeit $T_e$ zu so kann der Anteil des jeweiligen Spannungszeigers an der festgelegten Pulsperiode aus dem Abstand zwischen den Abszissenwerten des errechneten Schwerpunktes und des mit dem Zugehörigkeitswert 1 der jeweils anderen linguistischen Variable belegten bestimmt werden. Mit den Zahlenwerten ergeben sich bezogen auf eine Pulsperiode von 1 ms für den einen Spannungszeiger Vektor $V_1$ $T_1$ = 0,8 ms und für den anderen Zeiger Vektor $V_2$ $T_2$ = 0.2 ms. Damit sind die zwei Spannungszeiger und ihre Einschaltzeiten bestimmt.
Für bekannte Spannungssteuerverfahren mit Pulsweitenmodulation ist es üblich, zur Bildung eines mittleren Spannungszeigers drei Spannungszeiger, und zwar zwei Wirkspannungszeiger und einen sogenannten Nullspannungszeiger zu beteiligen. Dieser Forderung kann durch eine Erweiterung des Defuzzifizierungsverfahrens auf drei linguistische Variable Rechnung getragen werden. Danach werden zunächst paarweise die Schwerpunkte der Flächen unter den Zugehörigkeitsfunktionen gebildet und die entsprechenden Einschaltzeiten ermittelt. Die Summe der Einschaltzeiten wird dann ins Verhältnis zur festgelegten Pulsperiode gesetzt und daraus die tatsächlichen Einschaltzeiten für jeden Spannungszeiger bzw. jede linguistische Ausgangsvariable unter Einbeziehung des Nullspannungszeigers entsprechend der Variablen SK (Flußzeiger stillstehend konstant halten) ermittelt. Eine weitere Möglichkeit besteht darin, alle paarweise ermittelten Einschaltzeiten zu summieren und anschließend zu halbieren. Dieses Ergebnis wird in Verhältnis zur vorgegebenen Pulsperiode gesetzt und danach anteilmäßig die einzelnen Einschaltzeiten ermittelt.
Die Zuordnung der linguistischen Ausgangsvariablen zwecks Steuerung des Flußzeigers zu den aktuellen Spannungszeigern wird nach Fig. 1 durch Funktionsblock 7 vorgenommen. Dazu wird aus dem von Einrichtung 2 kommenden Sektorerkennungssignal Se für die Lage des aktuellen Flußzeigers und der in der Fuzzy-Logik 5 gebildeten linguistischen Ausgangsvariable $V_v$ ein durch die jeweilige in der Einrichtung 6 bestimmte Einschaltzeit $T_v$ charakterisierten Ansteuersignal ausgegeben. Dies kann in Form von EPROM-Schaltungen oder Tabellenrechnungen in Mikroprozessoren realisiert werden.
Eine Einbeziehung des Nullspannungszeigers zur Erzeugung von pulsweitenmodulierten Stellsignalen erfordert eine Modifikation der Regelbasis, wie sie durch die bisherige Kontrollmatrix nach Fig. 5 für eine kreisförmige Flußbahn vorgegeben wurde. Die Regelbasis besteht jetzt aus einer Kontrollmatrix für die Wirkspannungszeiger entsprechend Fig. 10a und einer Kontrollmatrix für den Nullspannungszeiger entsprechend Fig. 10b.
Dabei ist wesentlich und erkennbar, daß der vorherige Anteil des Nullspannungszeigers nur noch auf eine Drehmomentkategorie (-mittel) reduziert wird und sich in den Grenzkategorien für den Flußbetrag Erweiterungen für die direkten Spannungszeiger (SS) und (SE) ergeben. Die zweite Kontrollmatrix für den Nullspannungszeiger (Fig. 10b) sieht für diesen Fall nur eine Kategorisierung dieses Zeigeranteils in stark, mittel und wenig vor.

Die in Fig. 1 dargestellte Schaltung ist dann im Bereich der dortigen Fuzzy-Logik 5 und der Einrichtung zur Defuzzifizierung 6 zu erweitern, wobei auf Fig. 11 verwiesen wird.

Wird dabei der Nullspannungszeiger durch die mit 10 gekennzeichnete Regelmatrix (RMN) zur Nullspannungszuschaltung bestimmt, so kann auch dieser Zeiger in bekannter Weise defuzzifiziert werden. Das Ergebnis der Schwerpunktbildung in Block 11 liefert als x-Koordinate einen Wert zwischen 0 und 1, der für die weitere Verrechnung mit den Wirkspannungszeigern wieder als finaler Wahrheitsgehalt interpretiert werden kann. Die geforderten Pulszeiten werden danach wie folgt bestimmt: Jeder Spannungszeiger, gewichtet durch den finalen Wahrheitsgehalt der vorherigen Fuzzy-Operation wird mit den anderen Zeigern in den Blöcken 12, 13, 14 einer getrennten Defuzzifizierung unterzogen. Die jeweiligen gegenwärtigen Zeitanteile werden auf die in Fig. 8 gezeigte Art und Weise ermittelt. Das so dreifach erhaltene Resultat wird durch Aufsummierung der Pulszeiten der jeweils zugehörigen Spannungszeiger zum Endergebnis der Pulszeiten zweier Wirkspannungszeiger und eines Nullspannungszeigers geführt.

Gemäß einer weiteren Ausgestaltung der Erfindung ist es vorteilhaft, die aus der Einrichtung 6 gewonnenen Einschaltzeiten $T_v$ nochmals zu wichten, indem die durch die auszuwählenden Spannungszeiger entstehenden Gradienten von Fluß und Drehmoment prädikativ berechnet werden. Diese lassen sich aus den obigen Gleichungen für das Drehmoment, den Ständerfluß und die Rotorflußgleichung:

$$\underline{\dot{\Psi}}_r = (-\delta_r + j\omega)\, \underline{\Psi}_r + \delta_r\, \underline{\Psi}_s \quad (\delta_r = \frac{1}{T_r}\ ;\ T_r = \text{Rotorzeitkonstante})$$

beschreiben durch einfache trigonometrische Funktionen, die nachfolgend in per unit Form lauten:

$$\dot{\Psi}_s = \hat{U}_s\, \cos(\alpha-(v-1)\frac{\pi}{3}) + \frac{\hat{\Psi}_r}{T_h}\cos\delta - \frac{\hat{\Psi}_s}{T_\sigma}$$

sowie

$$\dot{m} = \frac{2\hat{\Psi}_r}{L\sigma}\,(\hat{U}_s\,\sin(\alpha-\delta-(v-1)\frac{\pi}{3}) + \frac{\hat{\Psi}_r}{T_h}\sin 2\delta - \frac{\hat{\Psi}_s}{T_h}\sin\delta$$

Unter Einbeziehung der prädiktiv berechneten Gradienten können dann die modifizierten Einschaltzeiten gemäß

$$T_1{}^* = \frac{T\cdot T_1}{T_1 + \frac{\dot{x}_1}{\dot{x}_2}T_2} \qquad T_2{}^* = \frac{T\cdot T_2}{T_2 + \frac{\dot{x}_2}{\dot{x}_1}T_1}$$

bestimmt werden.

In Fig. 9 wird diese Funktion durch den zum Fuzzy-Regler nach Fig. 1 parallel geschalteten Block (8) erfüllt, der aus den Fluß- und Drehmoment-Istwerten, dem Winkel $\delta$ zwischen Rotor- und Ständerflußzeiger und den zu schaltenden Spannungszeigern die zukünftigen Gradienten $\underline{\dot{x}}$ ermittelt. Diese werden in einem weiteren Verrechnungsblock (9) mit den aus der Einrichtung (6) gewonnenen Zeiten $T_v$ zu modifizierten Einschaltzeiten $T_v{}^*$ gewandelt.

**Patentansprüche**

1. Verfahren zur Selbstregelung einer umrichtergespeisten Drehstrommaschine, dei dem aus den Ständerstrom- und Ständerspannungskomponenten ($i_s, v_s$) die Istwerte der Standerfluß-Komponent ($\Psi$) und des Drehmomentes (m) gebildet werden und aus der Lage des Ständerflußzeigers (2) die Vorauswahl der über den Wechselrichter einzuschaltenden Ständerspannungszeiger erfolgt,
   **dadurch gekennzeichnet**,
   daß die Regeldifferenz des Ständerflußbetrages ($\Delta\psi$) und des Drehmomentes ($\Delta m$) einem Fuzzy-Regler zugeführt werden, der über eine festgelegte Pulsperiode (T) die einzuschaltenden Spannungszeiger ($V_v$) mit zugeordneten Pulszeiten ($T_v$) ermittelt und über eine Pulsweitenmodulation (7) die Stellsignale ($s_a$, $s_b$, $s_c$) erzeugt.

**2.** Verfahren nach Anspruch 1,
**dadurch gekennzeichnet**,

daß der Fuzzy-Regler eingangsseitig (3,4) die Regeldifferenzen für den Ständerflußbetrag ($\Delta\Psi$) bzw. für das Drehmoment ($\Delta$m) in eine vorzugsweise gerade Anzahl von Kategorien von groß bis groß$^+$ einteilt, wobei jeder Kategorie eine lineare Zugehörigkeitsfunktion zugeordnet wird, die bei höchstem Wahrheitsgehalt den Wert 1 besitzt und daß dieser Wert entweder symmetrisch linear abfällt bis zum Wert Null, wenn die Regeldifferenzen der jeweils benachbarten Kategorien mit dem Wahrheitsgehalt 1 belegt sind oder den Wert 1 beibehält, wenn keine Nachbarkategorie existiert und

daß eine Fuzzy-Logik (6) eine logische Verknüpfung der beiden Kategorienklassen sowie arithmetische bzw. logische Verrechnung von deren Zugehörigkeitsfunktionen über Kontrollregeln so vornimmt, daß alle bestehenden Verstellmöglichkeiten des Ständerflußzeigers ($\underline{\Psi}_S$) über die Stellgliedspannung ($u_S$) zum Erhöhen, Konstanthalten bzw. Reduzieren in positiver und negativer Drehrichtung ausgenutzt werden und daß ausgangsseitig (6) die aus den Kontrollregeln hervorgehenden Spannungszeiger ($V_\nu$) mit dem höchsten finalen Wahrheitsgehalt ausgewählt werden, deren Pulszeiten ($T_\nu$) aus dem Verhältnis der Flächeninhalte der mit den jeweils gefundenen Wahrheitsgehalten multiplizierten Zugehörigkeitsfunktionen, bezogen auf die Pulsperiode (T) bestimmt werden.

**3.** Verfahren nach den Ansprüchen 1 oder 2,
**dadurch gekennzeichnet**,
daß die Regeldifferenzen für den Ständerflußbetrag ($\Delta_\Psi$) und das Drehmoment ($\Delta$m) in vorzugsweise 6 Kategorien - bezeichnet mit groß$^-$, mittel$^-$, klein$^-$, klein$^+$, mittel$^+$, groß$^+$ - eingeteilt werden, wobei die Kategoriegrenzen für die Drehmoment-Regeldifferenz ($\Delta$m) größer als die für den Ständerflußbetrag ($\Delta\psi$) festgelegt werden.

**4.** Verfahren nach den Ansprüchen 1 bis 3,
**dadurch gekennzeichnet**,
daß zur Bildung der Stellsignale ($s_a$, $s_b$, $s_c$) jeweils die beiden Spannungszeiger ($V_\nu$) mit dem aus den Kontrollregeln hervorgehenden höchsten finalen Wahrheitsgehalt herangezogen werden und daß deren Pulszeiten ($T_\nu$) so gewichtet werden, daß sie dem Verhältnis der Flächeninhalte der mit den beiden gefundenen Wahrheitsgehalten ($h_f$) multiplizierten Zugehörigkeitsfunktionen (h) entsprechen.

**5.** Verfahren nach Anspruch 4,
**dadurch gekennzeichnet**,
daß zur Bildung der Stellsignale ($s_a$, $s_b$, $s_c$) in einer Pulsperiode jeweils die beiden Spannungszeiger ($V_\nu$) mit dem aus den Kontrollregeln hervorgehenden höchsten finalen Wahrheitsgehalt herangezogen werden und daß deren Pulszeiten ($T_\nu$) dadurch ermittelt werden, daß die vorzugsweise dreieckförmigen Zugehörigkeitsfunktionen beider Spannungszeiger ($V_\nu$) mit dem jeweiligen finalen Wahrheitswert ($h_f$) aus den Kontrollregeln gewichtet und ein Flächenschwerpunkt gebildet wird, aus dessen Abszissenwert über den Zugehörigkeitswerten beider Spannungszeiger der Anteil beider Einschaltzeiten an der Pulsperiode bestimmt wird.

**6.** Verfahren nach den Ansprüchen 1 bis 3,
**dadurch gekennzeichnet**,
daß zur Bildung der Stellsignale ($s_a$, $s_b$, $s_c$) die Wirk-Spannungszeiger mit den höchsten finalen Wahrheitsgehalten sowie ein Null-Spannungszeiger herangezogen werden, wobei die jeweiligen Pulszeiten ($T_\nu$) aus dem gegenseitigen Verhältnis der Flächeninhalte der mit den gefundenen Wahrheitsgehalten ($h_f$) multiplizierten Zugehörigkeitsfunktionen (h) in bezug auf die Wirk- und Nullspannungszeiger ermittelt werden.

**7.** Verfahren nach Anspruch 6,
**dadurch gekennzeichnet**,
daß zur Bildung der Stellsignale ($s_a$, $s_b$, $s_c$) in einer Pulsperiode (T) jeweils die beiden Wirk-Spannungszeiger ($V_\nu$) mit dem aus den Kontrollregeln hervorgehenden höchsten finalen Wahrheitsgehalt und zusätzlich der Nullspannungszeiger herangezogen werden und daß deren Pulszeiten ($T_\nu$) dadurch ermittelt werden, daß die vorzugsweise dreieckförmigen Zugehörigkeitsfunktionen dieser Spannungszeiger mit dem jeweiligen finalen Wahrheitswert aus den Kontrollregeln gewichtet und paarweise untereinander Flächenschwerpunkte gebildet werden, aus deren Abszissenwerten über die Zugehörigkeitswerte der jeweils verglichenen Spannungszeiger die gegenseitigen Anteile der Einschaltzeiten an der Pulsperiode bestimmt werden, wobei sich die tatsächliche Einschaltzeit ($T_\nu$) aus einem Drittel der Summe aller zu einem Spannungszeiger gehörigen Pulszeiten ergibt.

**8.** Verfahren nach einem der vorhergehenden Ansprüche,
**dadurch gekennzeichnet**,
daß die Pulsperiode (T) vorzugsweise konstant gehalten wird.

**9.** Verfahren nach Anspruch 4 oder 6,
**dadurch gekennzeichnet**,
daß die ermittelten Pulszeiten ($T_v$) mit dem Verhältnis der durch die zwei bzw. drei ausgewählten Spannungszeiger ($V_v$) entstehenden zukünftigen Gradienten für das Drehmoment und den Ständerflußbetrag gewichtet werden.

## Claims

**1.** Method for the automatic regulation of an inverter-fed polyphase alternating current machine, in which method the actual values of the stator flux components ($\Psi$) and of the torque (m) are formed from the components of the stator current ($i_s$) and the stator voltage ($u_s$) and the preliminary selection of the stator voltage vectors to be switched on by way of the inverted converter takes place from the position of the stator flux vector (2), characterised thereby, that the regulating differences of the stator flux magnitude ($\Delta\Psi$) and the torque ($\Delta m$) are fed to a fuzzy regulator which ascertains the voltage vectors ($V_v$), which are to be switched on, with associated pulse times ($T_v$) over a fixed pulse period (T) and produces the setting signals ($s_a$, $s_b$, $s_c$) by way of a pulse width modulator (7).

**2.** Method according to claim 1, characterised thereby, that the fuzzy regulator at its input (3, 4) divides the respective regulating difference for the stator flux magnitude ($\Delta\Psi$) and for torque ($\Delta m$) into a preferably even number of categories of great$^-$ to great$^+$, wherein each category is allocated a linear association function which has the value 1 for the highest truth content and that this value either falls linearly to the value zero symmetrically when the the regulating differences of the respectively adjacent categories are covered by the truth content 1 or retains the value 1 when no adjacent category exists and that a fuzzy logic system (6) so undertakes a logical interlinking of both the category classes as well as an arithmetical or logical computation of their association functions by way of check rules that all existing possibilities of adjustment of the stator flux vector ($\underline{\Psi}_s$) are utilised in positive and negative rotational direction for increasing, keeping constant or reducing by way of the setting member voltage ($u_s$) and that - at the output (6) - the voltage vectors ($V_v$), which emanate from the check rules with the highest final truth content, are selected and their pulse times ($T_v$) are ascertained with reference to the pulse period (T) from the ratio of the area contents of the association functions multiplied by the respectively found truth contents.

**3.** Method according to either claim 1 or 2, characterised thereby, that the regulating differences for the stator flux magnitude ($\Delta\Psi$) and the torque ($\Delta m$) are divided into preferably 6 categories respectively denoted as great$^-$, medium$^-$, small$^-$, small$^+$, medium$^+$, great$^+$, wherein the category limits for the torque regulating difference ($\Delta m$) are determined to be greater than for the stator flux magnitude ($\Delta\Psi$).

**4.** Method according to the claims 1 to 3, characterised thereby, that for the formation of the setting signals ($s_a$, $s_b$, $s_c$), both the voltage vectors ($V_v$) with the highest final truth content emanating from the check rules are drawn upon each time and that their pulse times ($T_v$) are so weighted that they correspond with the ratio of the area contents of the association functions multiplied by both the found truth contents ($h_f$).

**5.** Method according to claim 4, characterised thereby, that for the formation of the setting signals ($s_a$, $s_b$, $s_c$), both the voltage vectors ($V_v$) with the highest final truth content emanating from the check rules are drawn upon in each pulse period and that their pulse times ($T_v$) are ascertained by the preferably triangular association functions of both the voltage vectors ($V_v$) being weighted by the respective final truth value ($h_f$) from the check rules and a centre of gravity of area is formed, from the abscissa point of which the proportion of the pulse period for both the switch-on times is determined by way of the association values of both the voltage vectors.

**6.** Method according to the claims 1 to 3, characterised thereby, that for the formation of the setting signals ($s_a$, $s_b$, $s_c$), the effective voltage vectors with the highest final truth contents as well as a zero voltage vector are drawn upon, wherein the respective pulse times ($T_v$) are ascertained with respect to the effective and zero voltage vectors from the mutual ratio of the area contents of the association functions (h) multiplied by the found truth contents.

**7.** Method according to claim 6, characterised thereby, that for the formation of the setting signals ($s_a$, $s_b$, $s_c$), both the effective voltage vectors ($V_v$) with the highest final truth content emanating from the check rules and in addition the zero voltage vector are drawn upon in each pulse period and that their pulse times ($T_v$) are ascertained by

the preferably triangular association functions of these voltage vectors being weighted by the respective final truth value from the check rules and centres of gravity of area are formed in pairs one among the other, from the abscissa points of which centres the mutual proportions of the pulse period of the switch-on times are determined by way of the association values of the respective compared voltage vectors, wherein the actual switch-on time ($T_v$) results from one third of the sum of all pulse times belonging to one voltage vector.

8. Method according to one of the preceding claims, characterised thereby, that the pulse period (T) is preferably kept constant.

9. Method according to either claim 4 or 6, characterised thereby, that the ascertained pulse times ($T_v$) are weighted by the ratio of the future gradients, which arise due to the two or three selected voltage vectors ($V_v$), for the torque and the stator flux magnitude.


**Revendications**

1. Procédé d'autorégulation d'une machine à courant triphasé alimentée par un convertisseur de fréquence, dans le cas duquel, à partir des composantes de l'intensité ($i_s$) du courant passant dans le stator et de la tension ($v_s$) aux bornes du stator, on forme les valeurs réelles des composantes du flux ($\Psi$) dans le stator et du moment de rotation (m) et dans le cas duquel, à partir de la position du vecteur ($\Psi_s$) du flux dans le stator se fait la présélection des vecteurs de la tension aux bornes du stator à mettre en circuit par l'intermédiaire de l'onduleur,
    caractérisé
    par le fait que l'on envoie la différence entre valeur prescrite et valeur réelle, concernant la valeur absolue ($\Delta\Psi$) du flux dans le stator et le moment de rotation ($\Delta$m) à un régulateur à logique floue, qui, pour la durée d'une période d'impulsion déterminée (T), établit les vecteurs de tension ($V\upsilon$) à mettre en circuit, avec des durées d'impulsions ($T\upsilon$) associées et, au moyen d'une modulation (7) de la durée d'impulsion, produit les signaux réglants ($s_a$, $s_b$, $s_c$).

2. Procédé selon la revendication 1,
    caractérisé

    par le fait que, du côté de l'entrée (3, 4), le régulateur à logique floue répartit les différences entre valeur prescrite et valeur réelle concernant la valeur absolue ($\Delta\Psi$) du flux dans le stator ou le moment de rotation ($\Delta$m) en un certain nombre, de préférence pair, de catégories, de fort⁻ à fort⁺, étant précisé qu'à chaque catégorie on fait correspondre une fonction de correspondance linéaire qui, dans le cas du pourcentage de vérité le plus élevé, possède la valeur 1 et que soit cette valeur décroît symétriquement linéairement jusqu'à la valeur zéro lorsqu'aux différences entre valeur prescrite et valeur réelle des catégories effectivement voisines, est affecté le pourcentage de vérité 1, soit conserve la valeur 1 lorsqu'aucune catégorie voisine n'existe et
    par le fait qu'un circuit à logique floue (6) procède à une liaison logique des deux classes de catégorie ainsi qu'à un calcul arithmétique ou logique de leurs fonctions de correspondance au moyen des règles de commande de façon telle que toutes les possibilités existantes de déplacement du vecteur ($\Psi_s$) du flux du stator en fonction de la tension ($u_s$) de l'élément réglant soient utilisées pour augmenter, maintenir constante ou réduire dans le sens de rotation positif et négatif et par le fait que, du côté de la sortie (6), on sélectionne les vecteurs de tension ($V_\upsilon$), résultant des règles de commande et présentant le plus haut pourcentage de vérité final, dont les durées d'impulsion ($T_\upsilon$) rapportées à la période d'impulsion (T), sont déterminées à partir du rapport entre les aires des surfaces des fonctions de correspondance multipliées par les pourcentages de vérité respectivement trouvés.

3. Procédé selon la revendication 1 ou 2,
    caractérisé
    par le fait que l'on répartit les différences entre valeur prescrite et valeur réelle concernant la valeur absolue ($\Delta\Psi$) du flux du stator et le moment de rotation ($\Delta$m) en, de préférence, six catégories - désignées par fort⁻, moyen⁻, faible⁻, faible⁺, moyen⁺, fort⁺ - les limites de catégorie pour la différence entre valeur prescrite et valeur réelle concernant le moment de rotation ($\Delta$m) étant déterminées supérieures à celles concernant la valeur absolue ($\Delta\Psi$) du flux du stator.

4. Procédé selon la revendication 1 à 3,
    caractérisé

9

par le fait que pour former les signaux réglants ($s_a$, $s_b$, $s_c$), on fait respectivement appel aux deux vecteurs de tension ($V_\upsilon$) présentant le plus haut pourcentage de vérité final résultant des règles de commande et que l'on pondère leurs durées d'impulsion ($T_\upsilon$) de façon qu'elle correspondent au rapport des aires des surfaces des fonctions de correspondance (h) multipliées par les deux pourcentages de vérité ($h_f$) trouvés.

5. Procédé selon la revendication 4,
caractérisé
par le fait que, pour former les signaux réglants ($s_a$, $s_b$, $s_c$), sur une période d'impulsion, on fait respectivement appel aux deux vecteurs de tension ($V_\upsilon$) présentant le plus haut pourcentage de vérité final résultant des règles de commande et que l'on établit leurs durées d'impulsion ($T_\upsilon$) par le moyen que l'on pondère les fonctions de correspondance, de préférence de forme triangulaire, des deux vecteurs de tension ($V_\upsilon$) avec le pourcentage de vérité final ($h_f$) respectif résultant des règles de commande et que l'on forme un centre de gravité des aires, à partir de la valeur de l'abscisse duquel, au moyen des valeurs de correspondance des deux vecteurs de tension, on détermine la proportion des deux durées de mise en circuit sur la période d'impulsion.

6. Procédé selon les revendications 1 à 3,
caractérisé
par le fait que, pour former les signaux réglants ($s_a$, $s_b$, $s_c$), on fait appel aux vecteurs de tension efficace présentant les plus hauts pourcentages de vérité finals, ainsi qu'à un vecteur de tension nulle, étant précisé qu'en ce qui concerne les vecteurs de tension efficace et nulle, on établit les durées d'impulsion respectives ($T_\upsilon$) à partir du rapport mutuel des aires des surfaces des fonctions de correspondance (h) multipliées par les pourcentages de vérité ($h_f$) trouvés.

7. Procédé selon la revendication 6,
caractérisé
par le fait que, pour former les signaux réglants ($s_a$, $s_b$, $s_c$) sur une période d'impulsion (T), on fait respectivement appel aux deux vecteurs de tension efficace ($V_\upsilon$) présentant le plus haut pourcentage de vérité final résultant des règles de commande et, en outre, au vecteur de tension nulle, et que l'on établit leurs durées d'impulsion ($T_\upsilon$) par le moyen que l'on pondère les fonctions de correspondance, de préférence de forme triangulaire, de ces vecteurs de tension avec le pourcentage de vérité final respectif résultant des règles de commande et que l'on forme, en groupant ces fonctions deux à deux, des centres de gravité des aires, à partir des valeurs des abscisses desquels, au moyen des valeurs de correspondance des vecteurs de tension respectivement comparés, on détermine les proportions mutuelles des durées de mise en circuit sur la période d'impulsion, étant précisé que la durée effective de mise en circuit ($T_\upsilon$) s'obtient à partir du tiers de la somme de toutes les durées d'impulsion appartenant à un vecteur de tension.

8. Procédé selon l'une des revendications précédentes,
caractérisé
par le fait que l'on maintient de préférence constante la période d'impulsion (T).

9. Procédé selon la revendication 4 ou 5,
caractérisé
par le fait que l'on pondère les durées d'impulsion établies ($T_\upsilon$) avec le rapport des gradients futurs qui, pour le mouvement de rotation et pour la valeur absolue du flux du stator, résultent des deux ou trois vecteurs de tension ($V_\upsilon$) sélectionnés.

Fig. 1

$$\sin\delta \sim M$$

Fig. 2

h : Zugehörigkeitsfunktion,
Wahrheitsgehalt

groß⁻    mittel⁻   klein⁻   klein⁺   mittel⁺    groß⁺

*Fig. 3*

VE             erhöhen
     Fluß vorwärts
VS             senken

SE             erhöhen
SS    Fluß stillstehend    senken
SK             konstant

RE             erhöhen
     Fluß rückwärts
RS             senken

1 momentaner Flußzeiger-Sektor

*Fig. 4*

G   Groß

M   Mittel

K   Klein

*Fig. 5*

12

| | | |
|---|---|---|
| VE | | erhöhen |
| VK | Fluß vorwärts | konstant |
| VS | | senken |
| | | |
| SK | Fluß stillstehend konstant | |
| | | |
| RE | | erhöhen |
| RK | Fluß rückwärts | konstant |
| RS | | senken |

1 momentaner Flußzeiger-Sektor

Fig. 6

G  Groß
M  Mittel
K  Klein

Fig. 7

$h_f$ : finaler Wahrheitswert

Fig. 8

Fig. 9

Fig. 10a

Fig. 10 b

RMV - Regelmatrix Vektorauswahl
RMN - Regelmatrix Nullvektorzuschltg.
FS  - Flächenschwerpunkt

Fig. 11